# EUROPEAN PATENT SPECIFICATION

(11) **EP 4 513 624 B1**
(45) Date of publication and mention of the grant of the patent: **17.12.2025**
(21) Application number: 24196072.3
(22) Date of filing: 23.08.2024
(51) Int. Cl.: H01M 50/526, H01M 10/613, H01M 50/507, H01M 10/627, H01M 10/647, H01M 50/503, H01M 50/209, H01M 10/6561, H01M 10/6551, H01M 10/6556

(54) **ENERGY STORAGE CABINET**
ENERGIESPEICHERSCHRANK
ARMOIRE DE STOCKAGE D'ÉNERGIE

(30) Priority: 23.08.2023 US 202363534181 P
(43) Date of publication of application: 26.02.2025
(73) Proprietor: Delta Electronics, Inc., Taoyuan City 333 (TW)
(72) Inventor: CHEN, Chin-Ming, 333 Taoyuan City (TW); WU, Chih-Yu, 333 Taoyuan City (TW); PENG, Yen-Kai, 333 Taoyuan City (TW)
(74) Representative: Riccardi, Elisa

(56) References cited:
- CN-A- 110 061 162
- CN-A- 115 775 933
- CN-U- 207 517 757
- US-A1- 2023 033 839

## Description

### BACKGROUND

### Technical Field

The present disclosure relates to an energy storage cabinet.

### Description of Related Art

Power storage equipment typical includes multiple batteries, as for example shown in document CN110061162A. In order to keep the temperatures of the batteries within an appropriate operating temperature range, power storage equipment should be provided with a temperature control mechanism.

### SUMMARY

In view of the foregoing, one of the objects of the present disclosure is to provide an improved energy storage cabinet which can uniformly cool the included battery packs, such that the temperature of the energy storage cabinet can be effectively controlled.

To achieve the objective stated above, in accordance with an embodiment of the present disclosure, an energy storage cabinet includes a frame, a plurality of battery packs and a cooling device. The frame includes a first support. The first support includes a pipe and a partition. The pipe has a first internal fluid passage. The partition is disposed in the pipe and divides the first internal fluid passage into at least one first flow channel and a second flow channel. The battery packs are disposed on the frame and each includes a housing and a plurality of battery cells disposed in the housing. The housing has at least one first vent and a second vent. The battery packs include at least one first battery pack and at least one second battery pack positioned on two opposite sides of the first support. The second vent of the first battery pack communicates with the second flow channel. The first vent of the second battery pack communicates with the first flow channel. The cooling device is configured to produce a cool air. The cool air is configured to enter the first vent of the first battery pack and the first flow channel of the first support. As the cool air passes through the first battery pack, the cool air is heated and becomes a warm air. The warm air is then discharged into the second flow channel of the first support through the second vent of the first battery pack.

In one or more embodiments of the present disclosure, the partition has two lateral edges and a central portion. The two lateral edges and the central portion are fixedly attached to an inner wall of the pipe.

In one or more embodiments of the present disclosure, the inner wall of the pipe has a first wall portion and a second wall portion opposite to the first wall portion. The two lateral edges of the partition are fixedly attached to the first wall portion. The central portion of the partition is fixedly attached to the second wall portion.

In one or more embodiments of the present disclosure, the at least one first flow channel includes two flow channels located on two sides of the central portion of the partition. The at least one first vent of the second battery pack includes two vents communicating with the two flow channels, respectively.

In one or more embodiments of the present disclosure, the partition is bent into a stepped shape between the central portion and the two lateral edges.

In one or more embodiments of the present disclosure, the first support extends substantially vertically. The at least one first battery pack and the at least one second battery pack are plural in number and are stacked along the first support. The second vent of each of the first battery packs communicates with the second flow channel of the first support. The first vent of each of the second battery packs communicates with the first flow channel of the first support.

In one or more embodiments of the present disclosure, the frame further includes a second support and a cool air duct. The first battery pack is positioned between the first support and the second support. The second support has a second internal fluid passage communicating with the first vent of the first battery pack. The cool air duct is connected to a cool air output port of the cooling device, the first flow channel of the first support, and the second support.

In one or more embodiments of the present disclosure, the frame further includes a third support and a warm air duct. The second battery pack is positioned between the first support and the third support. The third support has a third internal fluid passage communicating with the second vent of the second battery pack. The warm air duct is connected to a warm air input port of the cooling device, the second flow channel of the first support, and the third support to guide the warm air to return to the cooling device.

In one or more embodiments of the present disclosure, the battery packs are stacked along a vertical direction and are arranged into multiple stacks. One of the cool air duct and the warm air duct extends above the battery packs, and another one of the cool air duct and the warm air duct extends underneath the battery packs.

In one or more embodiments of the present disclosure, the cooling device is positioned on a lateral side of the battery packs. The cool air duct and the warm air duct extend substantially horizontally to the lateral side of the battery packs and are connected to the cooling device.

In one or more embodiments of the present disclosure, the first battery pack further includes a first duct structure surrounding the second vent. The pipe of the first support has a side opening communicating with the second flow channel. The first support further comprises a second duct structure surrounding the side opening and being coupled to the first duct structure. The first duct structure has a first sloping edge. The second duct structure has a second sloping edge. The first sloping edge and the second sloping edge have complementary shapes and abut against each other.

In one or more embodiments of the present disclosure, the second battery pack further includes a first duct structure surrounding the first vent. The pipe of the first support has a side opening communicating with the first flow channel. The first support further includes a second duct structure surrounding the side opening and being coupled to the first duct structure. The first duct structure has a first sloping edge. The second duct structure has a second sloping edge. The first sloping edge and the second sloping edge have complementary shapes and abut against each other.

In one or more embodiments of the present disclosure, the energy storage cabinet further includes a heat insulating member covering an upper side of the battery packs.

In one or more embodiments of the present disclosure, the heat insulating member includes at least one of a liquid tank and a heat insulating plate.

In accordance with an embodiment of the present disclosure, an energy storage cabinet includes a frame, as well as a plurality of battery packs, a cooling device and a liquid tank disposed on the frame. The battery packs and the cooling device are connected to the ducts. The cooling device is configured to produce a cool air. The cool air is circulated in the ducts and the battery packs to facilitate cooling of the battery packs. The liquid tank covers an upper side of the battery packs and part or all of the ducts.

In one or more embodiments of the present disclosure, the frame further includes a plurality of main supports. The main supports are positioned on an outer side the battery packs and are spaced apart from the battery packs, such that ventilation spaces are created on the outer side of the battery packs.

In sum, in the energy storage cabinet of the present disclosure, one or more supports of the frame are hollow structures. The hollow supports can act as fluid passages and communicate with the internal space of the battery packs. The supports and the battery packs thus collectively form a small confined space. Airflow output by the cooling device of the energy storage cabinet can be circulated in the small confined space to facilitate temperature control of the battery packs. On the other hand, conventional energy storage cabinets typically use air conditioner to control the temperature of the entire internal space of the cabinet. The conventional approach results in higher power consumption of the air conditioner, and moreover, requires the energy storage cabinet to be equipped with air conditioner of higher cooling capacity. Furthermore, a partition is provided inside the support. The partition divides the internal fluid passage of the support into a cool air channel and a warm air channel, such that the support can transport cool air and warm air at the same time without mixing the cool air and the warm air. This technique can help the cooling device save power, and can make the temperatures of the battery packs of the energy storage cabinet more uniform as well.

### BRIEF DESCRIPTION OF THE DRAWINGS

To make the objectives, features, advantages, and embodiments of the present disclosure, including those mentioned above and others, more comprehensible, descriptions of the accompanying drawings are provided as follows.
Fig. 1 illustrates a side view of an energy storage cabinet in accordance with an embodiment of the present disclosure;
Fig. 2 illustrates a schematic view of one of the battery packs of the energy storage cabinet shown in Fig. 1;
Fig. 3 illustrates a partially enlarged view of the slots of the energy storage cabinet shown in Fig. 1;
Fig. 4 illustrates a sectional view of the energy storage cabinet shown in Fig. 1 taken along the line segment 4-4';
Fig. 5 illustrates a sectional view of the energy storage cabinet shown in Fig. 1 taken along the line segment 5-5';
Fig. 6 illustrates a sectional view of the energy storage cabinet shown in Fig. 1 taken along the line segment 6-6'; and
Fig. 7 illustrates a side view of an energy storage cabinet in accordance with another embodiment of the present disclosure.

### DETAILED DESCRIPTION

For the completeness of the description of the present disclosure, reference is made to the accompanying drawings and the various embodiments described below. Various features in the drawings are not drawn to scale and are provided for illustration purposes only. To provide full understanding of the present disclosure, various practical details will be explained in the following descriptions. However, a person with an ordinary skill in relevant art should realize that the present disclosure can be implemented without one or more of the practical details. Therefore, the present disclosure is not to be limited by these details.

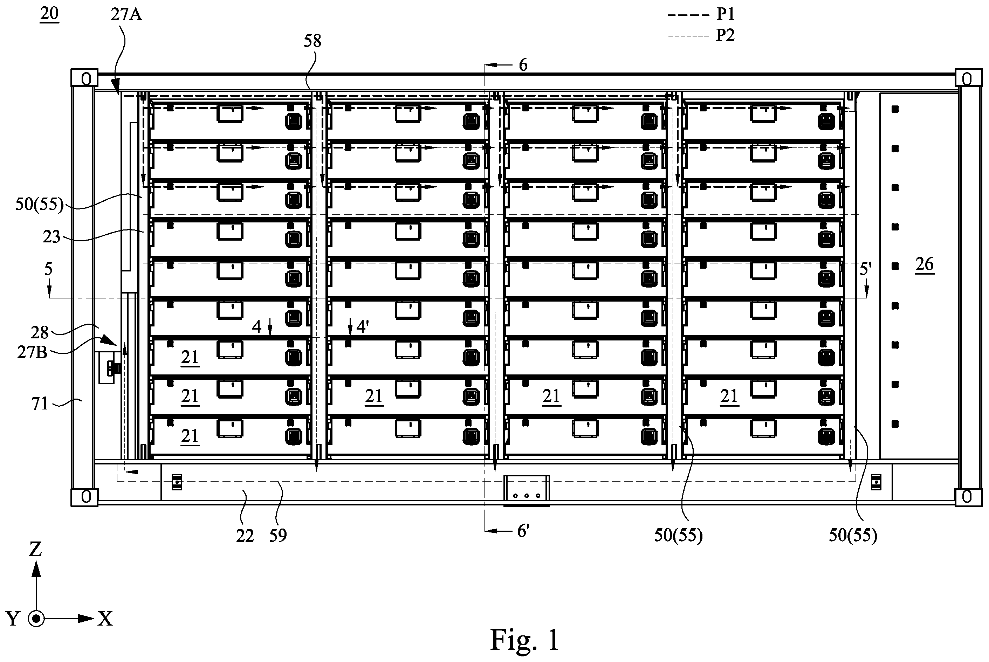

Reference is made to Fig. 1. Fig. 1 illustrates a side view of an energy storage cabinet 20 in accordance with an embodiment of the present disclosure. The energy storage cabinet 20 includes a frame 22 and one or more battery packs 21 disposed on the frame 22. The frame 22 is configured to support the battery packs 21. The frame 22 may have one or more slots, and each slot is configured to accommodate one of the battery packs 21. The battery packs 21 are removably disposed in the slots of the frame 22. In other words, the battery packs 21 can be inserted in the slots, and can be pulled out of the slots as needed (e.g., for the purpose of repair or maintenance). The frame 22 may include rail structures (not depicted in Fig. 1). The battery packs 21 may be engaged with rail structures of the frame 22, such that the battery packs 21 can be slid into or out of the slots. In some embodiments, the energy storage cabinet 20 may further include a plurality of door panels. The door panels cover laterals side of the frame 22 to isolate the battery packs 21 from the surrounding environment.

As shown in Fig. 1, the battery packs 21 are stacked along the vertical direction (e.g., along the Z direction). The battery packs 21 can be divided into multiple floor assemblies 23. Battery packs 21 with the same elevation belong to the same floor assembly 23. The battery packs 21 in the same floor assembly 23 may be arranged along the X direction. In the illustrated embodiment, the energy storage cabinet 20 includes nine floor assemblies 23, and one of which is identified by a dashed box. The battery packs 21 in the same floor assembly 23 are electrically connected in series, such that the voltages of the battery packs 21 in the same floor assembly 23 are summed up to produce a greater voltage. Each of the floor assemblies 23 may include a common anode and a common cathode.

As shown in Fig. 1, the energy storage cabinet 20 further includes a junction device 26. The junction device 26 is disposed on the frame 22 and is positioned on one side of the energy storage cabinet 20. The junction device 26 is connected to the common anode and the common cathode (not depicted) of each of the floor assemblies 23. The junction device 26 may include a DC junction unit, an AC auxiliary unit, and one or more control units (or one or more switch units).

As shown in Fig. 1, the energy storage cabinet 20 further includes at least one cooling device 28. The cooling device 28 is disposed on the frame 22 and is positioned on another side of the energy storage cabinet 20. The cooling device 28 is configured to produce a cool air, which can be supplied to the battery packs 21 to facilitate cooling of the battery packs 21. The cooling device 28 is, for example, an air conditioner. In some embodiments, the junction device 26 and the cooling device 28 are disposed on two opposite sides of the battery packs 21.

As shown in Fig. 1, the battery packs 21 are arranged into a plurality of stacks. The frame 22 of the energy storage cabinet 20 includes a plurality of supports 50 extending substantially vertically. Each of supports 50 can either be positioned between two adjacent stacks of the battery packs 21 or positioned on an outer side of the battery packs 21. In other words, the supports 50 and the multiples stacks of the battery packs 21 can be arranged in an interleaved manner. In some embodiments, each of the battery packs 21 is positioned between two supports 50.

As shown in Fig. 1, at least one of the supports 50 includes a pipe 55. The pipe 55 is a hollow structure and has an internal fluid passage. The internal fluid passage of the pipe 55 can communicate with the internal space of at least one of the battery packs 21 (e.g., a sidewall of the pipe 55 and a housing of the battery pack 21 can be have openings at corresponding positions). The frame 22 of the energy storage cabinet 20 further includes at least one cool air duct 58 and at least one warm air duct 59. In the illustrated embodiment, the cool air duct 58 extends above the battery packs 21, and the warm air duct 59 extends underneath the battery packs 21. The cool air duct 58 is connected to an upper end of at least one of the supports 50, and the warm air duct 59 is connected to a lower end of at least one of the supports 50. The internal fluid passage of the pipe 55 can communicate with the cool air duct 58 and the warm air duct 59 (the phrase "communicate with" used herein means "in fluid communication with"). The cooling device 28 is positioned on a lateral side of the battery packs 21. The cool air duct 58 and the warm air duct 59 extend substantially horizontally to the lateral side of the battery packs 21 and are connected to the cooling device 28. The cooling device 28 has a cool air output port 27A and a warm air input port 27B. In the illustrated embodiment, the cool air output port 27A and the warm air input port 27B are provided at an upper part and a lower part of the cooling device 28, respectively, and are connected to the cool air duct 58 and the warm air duct 59, respectively.

By this arrangement, the battery packs 21, the supports 50, the cool air duct 58, the warm air duct 59 and the cooling device 28 of the energy storage cabinet 20 of the present disclosure collectively form a small confined space. Airflow output by the cooling device 28 can be circulated in the small confined space to facilitate temperature control of the battery packs 21. On the other hand, conventional energy storage cabinets typically use air conditioner to control the temperature of the entire internal space of the cabinet. The conventional approach results in higher power consumption of the air conditioner, and moreover, requires the energy storage cabinet to be equipped with air conditioner of higher cooling capacity.

As shown in Fig. 1, the cool air produced by the cooling device 28 can flow along a first path P1. Specifically, the cool air can first flow along the cool air duct 58, and subsequently flow downward in the internal fluid passage of at least one of the supports 50, and subsequently enter the internal space of at least one of the battery packs 21 from one side of the battery packs 21. As the cool air passes through the battery packs 21, the cool air is heated and becomes a warm air. The warm air has a higher temperature than the cool air. The warm air can flow along a second path P2. Specifically, the warm air can exit the internal space of the battery packs 21 from another side of the battery packs 21, and subsequently flow downward in the internal fluid passage of at least one of the supports 50, and subsequently return to the cooling device 28 via the warm air duct 59.

It is noted that, in order to keep the lines of Fig. 1 simple and easy to read, Fig. 1 only schematically shows selective flow paths of the cool air and the warm air. The cool air and the warm air are not limited to these flow paths. In practice, the cool air can be supplied to any of the battery packs 21, and the warm air discharged from any of the battery packs 21 can be guided to flow back to the cooling device 28.

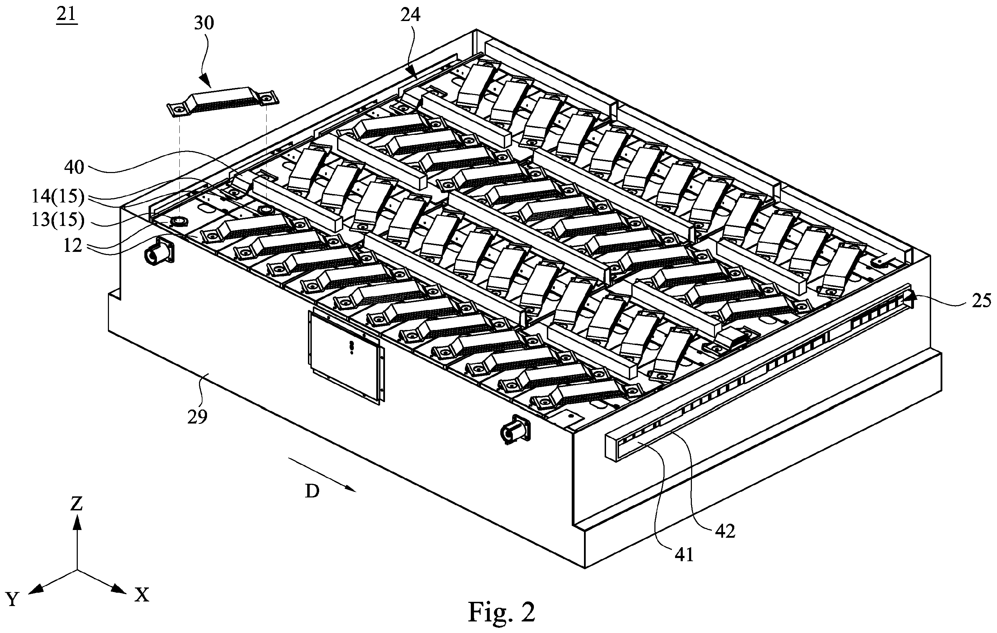

Reference is made to Fig. 2. Fig. 2 illustrates a schematic view of one of the battery packs 21 of the energy storage cabinet 20 shown in Fig. 1. In Fig. 2, a lid of the battery pack 21 is removed to reveal the interior of the battery pack 21. The battery pack 21 includes a housing 29 and a plurality of battery cells 12 disposed in the housing 29. The battery cells 12 are, for example, lithium-ion secondary batteries. The battery cells 12 may include prismatic cells or pouch type cells. The battery cells 12 are arranged in at least one row along a direction D.

As shown in Fig. 2, each of the battery cells 12 includes two electrodes 15 arranged side by side, one of which is a positive electrode 13 and the other is a negative electrode 14. The battery pack 21 further includes a plurality of first battery cell interconnection components 30, which may also be referred to as "busbars". The first battery cell interconnection components 30 are disposed in the housing 29 and are configured to connect the battery cells 12 in series. Specifically, each of the first battery cell interconnection components 30 is electrically connected to the positive electrode 13 and the negative electrode 14 of two immediately adjacent battery cells 12 in the same row. In some embodiments, the battery pack 21 further includes at least one second battery cell interconnection component 40. The second battery cell interconnection component 40 is disposed in the housing 29 and is electrically connected to the electrodes 15 of two battery cells 12 on adjacent rows. The first battery cell interconnection components 30 and the second battery cell interconnection component 40 may include electrically conductive materials, such as copper or copper alloy.

As shown in Fig. 2, the housing 29 of the battery pack 21 has at least one air inlet 24 and at least one air outlet 25. The air inlet 24 and the air outlet 25 are provided on opposite sides of the housing 29, e.g., the air inlet 24 and the air outlet 25 may be vents/openings formed on two opposite sidewalls of the housing 29, respectively. The air inlet 24 and the air outlet 25 communicate with the internal fluid passage of the supports 50 shown in Fig. 1. The cool air produced by the cooling device 28 can flow into the internal fluid passage of the supports 50 and then enter the housing 29 through the air inlet 24. As the cool air passes through the battery pack 21, the cool air is heated and becomes a warm air. For example, the cool air has a lower temperature than one or more heat sources in the battery pack 21, such as the battery cells 12, the first battery cell interconnection components 30 and the second battery cell interconnection component 40, and thus the cool air can absorb heat from the one or more heat sources to facilitate cooling the battery pack 21. The warm air is then discharged into the internal fluid passage of the supports 50 via the air outlet 25.

In some embodiments, the energy storage cabinet 20 has a fire protection function to cope with the situation where some or all of the battery cells 12 fail and the temperature goes out of control or even causes fire. When the energy storage cabinet 20 detects overheating of at least one battery pack 21, the energy storage cabinet 20 is configured to fill a cooling liquid (e.g., pure water) into the housing 29 of the at least one overheating battery pack 21. In said situation, at least one of the air inlet 24 and the air outlet 25 can act as a discharge port for the battery pack 21 to discharge excessive cooling liquid.

As shown in Fig. 2, in some embodiments, the battery pack 21 further includes at least one first duct structure 41. The first duct structure 41 is disposed on the housing 29 and surrounds the air inlet 24 or the air outlet 25 of the housing 29. The first duct structure 41 projects from an outer wall of the housing 29. The first duct structure 41 may have at least one first sloping edge 42. In some embodiments, the battery pack 21 includes two first duct structures 41, one of which surrounds the air inlet 24 and the other surrounds the air outlet 25. The two first duct structures 41 may be arranged symmetrically.

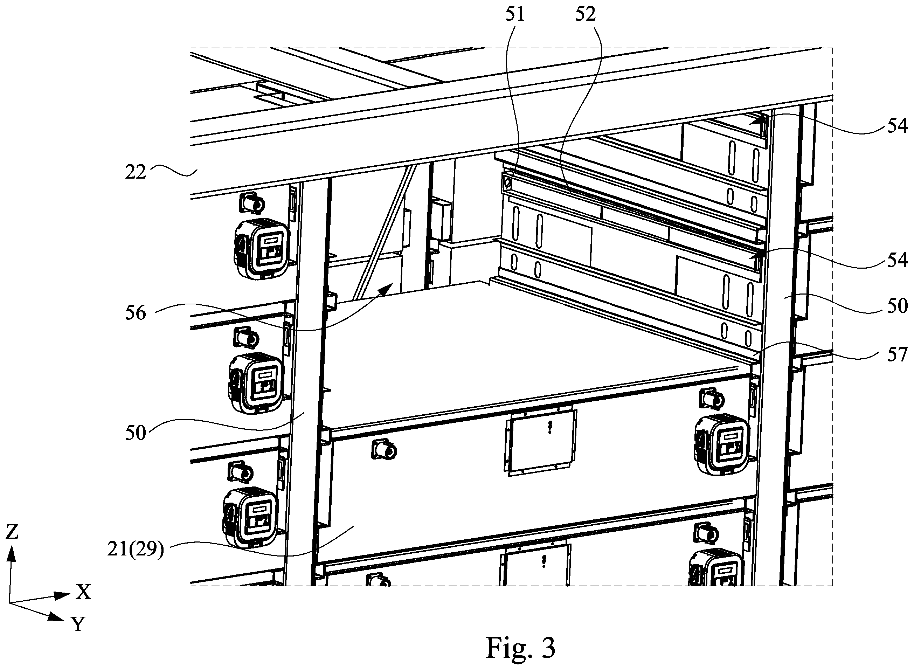

Reference is made to Fig. 3. Fig. 3 illustrates a partially enlarged view of the energy storage cabinet 20 shown in Fig. 1. As shown, two adjacent supports 50 of the frame 22 define multiple slots 56. The battery packs 21 are removably disposed in the slots 56. Fig. 3 shows some of the battery packs 21 being ejected from the slots 56. At least one of the supports 50 can include at least one guiding rail 57 disposed on a lateral surface of the supports 50. The guiding rail 57 is configured to detachably engage the housing 29 of the battery pack 21.

As shown in Fig. 3, the pipe 55 of at least one of the supports 50 has at least one side opening 54 communicating with the internal fluid passage of the pipe 55. Each side opening 54 faces and communicates with the air inlet 24 or the air outlet 25 of one of the battery packs 21. In some embodiments, at least one of the supports 50 further includes at least one second duct structure 51. Each second duct structure 51 is disposed on the pipe 55 and surrounds a respective side opening 54 of the pipe 55. The second duct structure 51 projects from an outer wall of the pipe 55 and is coupled to the first duct structure 41 of the battery pack 21 mentioned above. The second duct structure 51 may have at least one second sloping edge 52. The first sloping edge 42 of the first duct structure 41 mentioned above and the second sloping edge 52 of the second duct structure 51 have complementary shapes and abut against each other, such that the gap between the first duct structure 41 and the second duct structure 51 is minimized. With the first sloping edge 42 and the second sloping edge 52, the battery packs 21 can be smoothly inserted into or ejected from the slots 56.

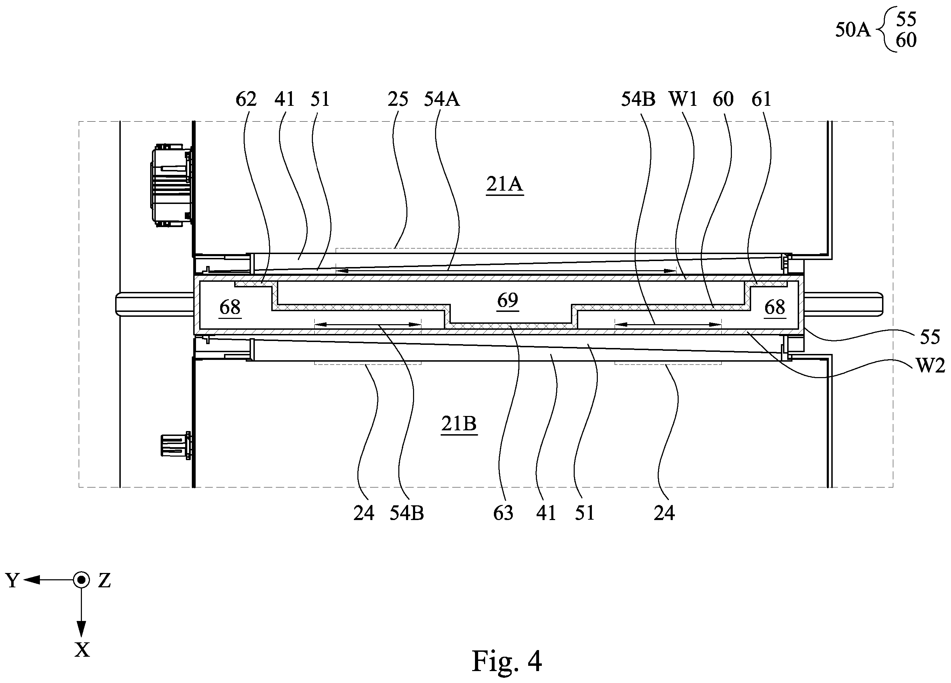

Reference is made to Fig. 4. Fig. 4 illustrates a sectional view of the energy storage cabinet 20 shown in Fig. 1 taken along the line segment 4-4'. As shown, the frame 22 includes a first support 50A. The first support 50A includes the pipe 55 described above, and further includes a partition 60. The partition 60 is disposed in the pipe 55 and divides the internal fluid passage of the pipe 55 into at least one cool air channel 68 and at least one warm air channel 69. The pipe 55 has at least one first side opening 54A and at least one second side opening 54B. The first side opening 54A and the second side opening 54B are located on two opposite sides of the partition 60 and communicate with the warm air channel 69 and the cool air channel 68, respectively. The battery packs 21 includes at least one first battery pack 21A and at least one second battery pack 21B positioned on two opposite sides of the first support 50A. The air outlet 25 of the first battery pack 21A communicates with the warm air channel 69 via the first side opening 54A of the pipe 55. The air inlet 24 of the second battery pack 21B communicates with the cool air channel 68 via the second side opening 54B of the pipe 55.

The cool air channel 68 is connected to the cool air duct 58 mentioned above to receive the cool air and deliver the cool air to the second battery pack 21B. The warm air channel 69 can receive the warm air discharged from the air outlet 25 of the first battery pack 21A. The warm air channel 69 is connected to the warm air duct 59 mentioned above, such that the warm air can return to the cooling device 28 mentioned above via the warm air duct 59. By providing the partition 60 in the pipe 55, the first support 50A can transport cool air and warm air at the same time and can prevent the warm air discharged from the first battery pack 21A from mixing with the cool air to be delivered to the second battery pack 21B behind the first battery pack 21A. This technique can help the cooling device 28 of the energy storage cabinet 20 save power, and can make the temperatures of the battery packs 21 of the energy storage cabinet 20 more uniform as well.

In some embodiments, the partition 60 extends from the upper end of the first support 50A (or the upper end of the pipe 55) to the lower end of the first support 50A (or the lower end of the pipe 55). The energy storage cabinet 20 may include a plurality of first battery packs 21A and a plurality of second battery packs 21B stacked along the first support 50A. The air outlet 25 of each of the first battery packs 21A communicates with the warm air channel 69 of the first support 50A, and the air inlet 24 of each of the second battery packs 21B communicates with the cool air channel 68 of the first support 50A. For example, the pipe 55 can have multiple first side openings 54A corresponding to the air outlets 25 of the multiple first battery packs 21A, and the pipe 55 can have multiple second side openings 54B corresponding to the air inlets 24 of the multiple second battery packs 21B. In other words, the cool air channel 68 of the first support 50A can distribute the cool air to a number of stacked battery packs 21, and the warm air channel 69 of the first support 50A can collect the warm air discharged from a number of stacked battery packs 21 and direct the warm air to the warm air duct 59 mentioned above (see the first path P1 along which the cool air flows and the second path P2 along which the warm air flows shown in Fig. 1).

As shown in Fig. 4, the partition 60 has two lateral edges 61 and 62 extending substantially vertically and fixedly attached to an inner wall of the pipe 55. The partition 60 further has a central portion 63 located between the two lateral edges 61 and 62. The central portion 63 may also be fixedly attached to the inner wall of the pipe 55 to increase the rigidity of the partition 60. The partition 60 is, for example, a metal sheet. The partition 60 can be affixed to the pipe 55 by soldering, screwing or other suitable means. The partition 60 may have a stepped shaped. Specifically, the partition 60 may be bent into a stepped shape between the central portion 63 and the two lateral edges 61 and 62.

As shown in Fig. 4, the inner wall of the pipe 55 has a first wall portion W1 and a second wall portion W2 opposite to the first wall portion W1. The two lateral edges 61 and 62 of the partition 60 can be fixedly attached to the first wall portion W1, and the central portion 63 of the partition 60 can be fixedly attached to the second wall portion W2. In some embodiments, the pipe 55 has two cool air channels 68 located on two sides of the central portion 63 of the partition 60, and the second battery pack 21B has two air inlets 24 communicating with the two cool air channels 68, respectively, via two different second side openings 54B of the pipe 55.

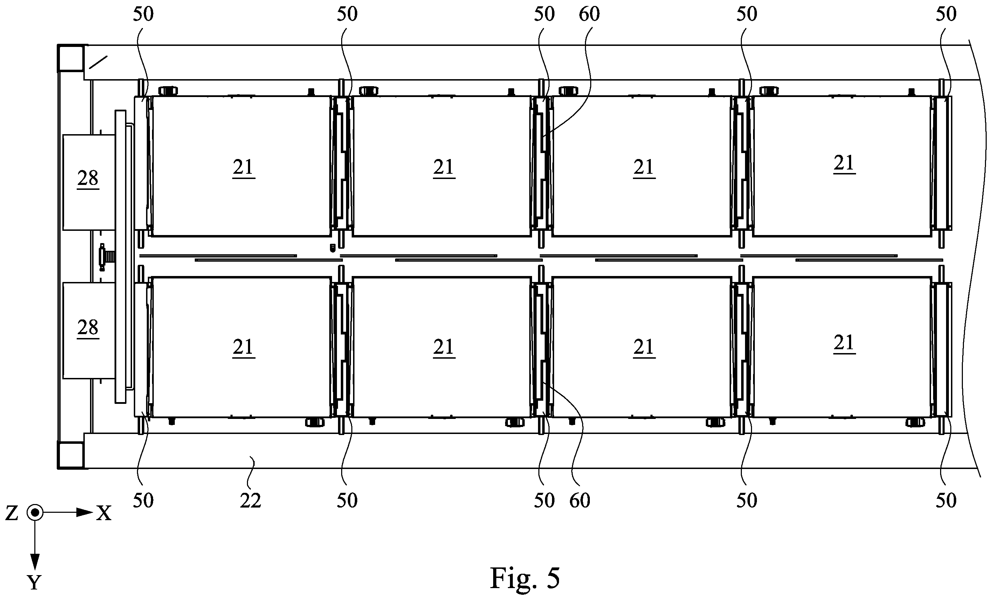

Reference is made to Fig. 5. Fig. 5 illustrates a sectional view of the energy storage cabinet 20 shown in Fig. 1 taken along the line segment 5-5'. As shown, any support 50 located between two battery packs 21 can include the partition 60, and any support 50 not located between two battery packs 21 does not necessarily have to include the partition 60. For example, the leftmost support 50 (the one closest to the cooling device 28) is only used to transport cool air and thus the partition 60 is not required. For example, the rightmost support 50 (the one farthest away from the cooling device 28) is only used to transport warm air and thus the partition 60 is not required.

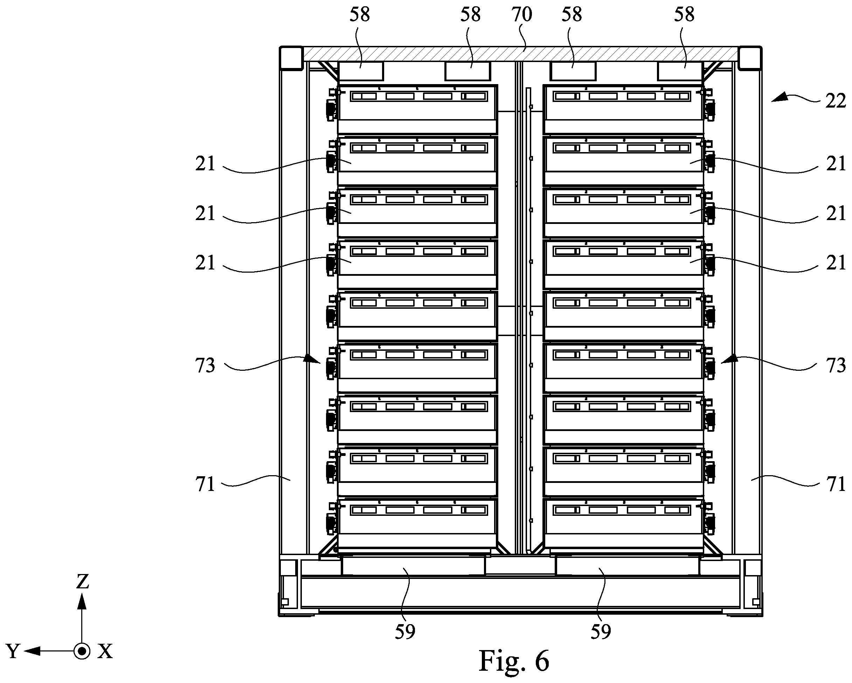

Reference is made to Fig. 6. Fig. 6 illustrates a sectional view of the energy storage cabinet 20 shown in Fig. 1 taken along the line segment 6-6'. As shown, in some embodiments, the energy storage cabinet 20 further includes a heat insulating member 70 disposed on the top of frame 22. The heat insulating member 70 covers an upper side of the battery packs 21 and an upper side of the cool air duct 58 to protect the battery packs 21 and the cool air duct 58 from sunlight. The heat insulating member 70 can include one of a liquid tank and a heat insulating plate. Alternatively, the heat insulating member 70 can include both a liquid tank and a heat insulating plate. For example, the liquid tank and the heat insulating plate may be provided in a stack arrangement. The liquid tank can store pure water or other suitable liquid. The liquid stored in the liquid tank can be used to implement the fire protection function mentioned above. The heat insulating plate may be formed of thermally insulating material.

As shown in Fig. 6, the frame 22 of the energy storage cabinet 20 further includes a plurality of main supports 71. The main supports 71 are positioned on the outer side the battery packs 21 and are spaced apart from the battery packs 21 to create ventilation spaces 73 to allow faster heat dissipation of the battery packs 21.

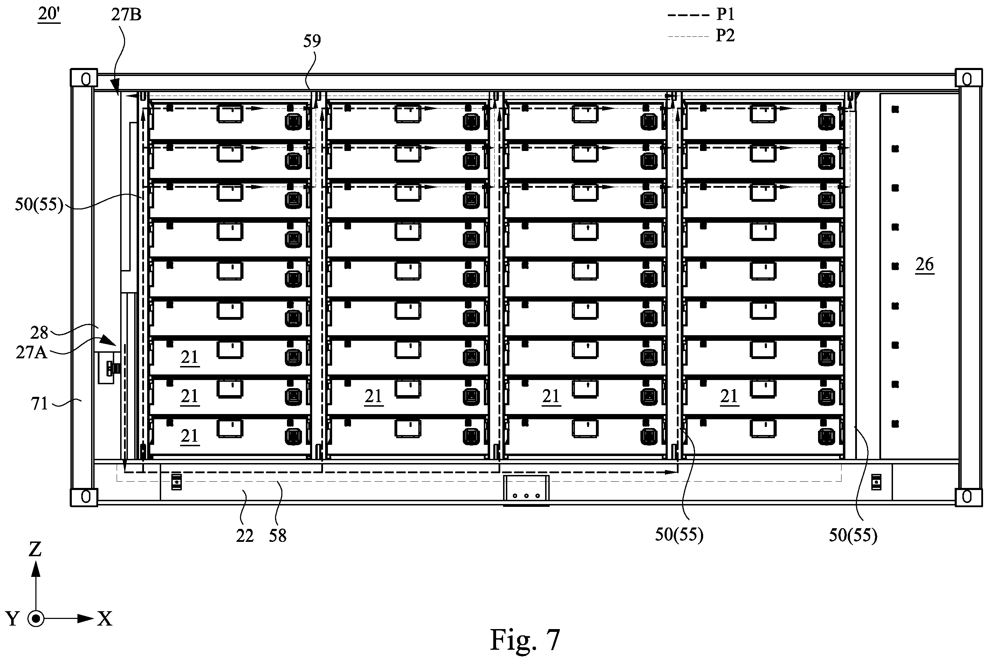

Reference is made to Fig. 7. Fig. 7 illustrates a side view of an energy storage cabinet 20' in accordance with another embodiment of the present disclosure. In the present embodiment, the cool air duct 58 of the energy storage cabinet 20' extends underneath the battery packs 21, and the warm air duct 59 of the energy storage cabinet 20' extends above the battery packs 21. The cool air duct 58 is connected to a lower end of at least one of the supports 50, and the warm air duct 59 is connected to an upper end of at least one of the supports 50. The cool air output port 27A and the warm air input port 27B of the cooling device 28 are provided at a lower part and an upper part of the cooling device 28, respectively, and are connected to the cool air duct 58 and the warm air duct 59, respectively.

As shown in Fig. 7, the cool air produced by the cooling device 28 can flow along a first path P1. Specifically, the cool air can first flow along the cool air duct 58 underneath the battery packs 21, and subsequently flow upward in the internal fluid passage of at least one of the supports 50 (e.g., flow in the cool air channel mentioned above), and subsequently enter the internal space of at least one of the battery packs 21 from one side of the battery packs 21. As the cool air passes through the battery packs 21, the cool air is heated and becomes a warm air. The warm air has a higher temperature than the cool air. The warm air can flow along a second path P2. Specifically, the warm air can exit the internal space of the battery packs 21 from another side of the battery packs 21, and subsequently flow upward in the internal fluid passage of at least one of the supports 50, and subsequently return to the cooling device 28 via the warm air duct 59 above the battery packs 21.

In sum, in the energy storage cabinet of the present disclosure, one or more supports of the frame are hollow structures. The hollow supports can act as fluid passages and communicate with the internal space of the battery packs. The supports and the battery packs thus collectively form a small confined space. Airflow output by the cooling device of the energy storage cabinet can be circulated in the small confined space to facilitate temperature control of the battery packs. On the other hand, conventional energy storage cabinets typically use air conditioner to control the temperature of the entire internal space of the cabinet. The conventional approach results in higher power consumption of the air conditioner, and moreover, requires the energy storage cabinet to be equipped with air conditioner of higher cooling capacity. Furthermore, a partition is provided inside the support. The partition divides the internal fluid passage of the support into a cool air channel and a warm air channel, such that the support can transport cool air and warm air at the same time without mixing the cool air and the warm air. This technique can help the cooling device save power, and can make the temperatures of the battery packs of the energy storage cabinet more uniform as well.

## Claims

1. An energy storage cabinet (20, 20'), **characterized by** comprising:
a frame (22) comprising a first support (50, 50A), the first support comprising a pipe (55) and a partition (60), wherein the pipe has a first internal fluid passage, the partition (60) is disposed in the pipe (55) and divides the first internal fluid passage into at least one first flow channel (68) and a second flow channel (69);
a plurality of battery packs (21) disposed on the frame (22) and each comprising a housing (29) and a plurality of battery cells (12) disposed in the housing, the housing having at least one first vent (24) and a second vent (25), wherein the battery packs comprise at least one first battery pack (21A) and at least one second battery pack (21B) positioned on two opposite sides of the first support (50, 50A), the second vent (25) of the at least one first battery pack (21A) communicates with the second flow channel (69), the at least one first vent (24) of the at least one second battery pack (21B) communicates with the at least one first flow channel (68); and
a cooling device (28) configured to produce a cool air, wherein the cool air is configured to enter the at least one first vent (24) of the at least one first battery pack (21A) and the at least one first flow channel (68) of the first support (50, 50A), and as the cool air passes through the at least one first battery pack (21A), the cool air is heated and becomes a warm air, the warm air is then discharged into the second flow channel (69) of the first support (50, 50A) through the second vent (25) of the at least one first battery pack (21A).

2. The energy storage cabinet of claim 1, **characterized in that** the partition (60) has two lateral edges (61, 62) and a central portion (63), the two lateral edges (61, 62) and the central portion (63) are fixedly attached to an inner wall of the pipe (55).

3. The energy storage cabinet of claim 2, **characterized in that** the inner wall of the pipe (55) has a first wall portion (W1) and a second wall portion (W2) opposite to the first wall portion (W1), the two lateral edges (61, 62) of the partition (60) are fixedly attached to the first wall portion (W1), and the central portion (63) of the partition (60) is fixedly attached to the second wall portion (W2).

4. The energy storage cabinet of claim 3, **characterized in that** the at least one first flow channel (68) comprises two flow channels located on two sides of the central portion (63) of the partition (60), wherein the at least one first vent (24) of the at least one second battery pack (21B) comprises two vents communicating with the two flow channels, respectively.

5. The energy storage cabinet of claim 3 or 4, **characterized in that** the partition (60) is bent into a stepped shape between the central portion (63) and the two lateral edges (61, 62).

6. The energy storage cabinet of any preceding claim, **characterized in that** the first support (50, 50A) extends substantially vertically, the at least one first battery pack (21A) and the at least one second battery pack (21B) are plural in number and are stacked along the first support (50, 50A), the second vent (25) of each of the first battery packs (21A) communicates with the second flow channel (69) of the first support (50, 50A), and the at least one first vent (24) of each of the second battery packs (21B) communicates with the at least one first flow channel (68) of the first support (50, 50A).

7. The energy storage cabinet of any preceding claim, **characterized in that** the frame (22) further comprises a second support (50) and a cool air duct (58), the at least one first battery pack (21A) is positioned between the first support (50, 50A) and the second support (50), the second support (50) has a second internal fluid passage communicating with the at least one first vent (24) of the at least one first battery pack (21A), the cool air duct (58) is connected to a cool air output port (27A) of the cooling device (28), the at least one first flow channel (68) of the first support (50, 50A), and the second support (50).

8. The energy storage cabinet of claim 7, **characterized in that** the frame (22) further comprises a third support (50) and a warm air duct (59), the at least one second battery pack (21B) is positioned between the first support (50, 50A) and the third support (50), the third support (50) has a third internal fluid passage communicating with the second vent (25) of the at least one second battery pack (21B), the warm air duct (59) is connected to a warm air input port (27B) of the cooling device (28), the second flow channel (69) of the first support (50, 50A), and the third support (50) to guide the warm air to return to the cooling device (28).

9. The energy storage cabinet of claim 8, **characterized in that** the battery packs (21) are stacked along a vertical direction and are arranged into multiple stacks, one of the cool air duct (58) and the warm air duct (59) extends above the battery packs (21), and another one of the cool air duct (58) and the warm air duct (59) extends underneath the battery packs (21).

10. The energy storage cabinet of claim 9, **characterized in that** the cooling device (28) is positioned on a lateral side of the battery packs (21), the cool air duct (58) and the warm air duct (59) extend substantially horizontally to the lateral side of the battery packs (21) and are connected to the cooling device (28).

11. The energy storage cabinet of any preceding claim, **characterized in that** the at least one first battery pack (21A) further comprises a first duct structure (41) surrounding the second vent (25), the pipe (55) of the first support (50, 50A) has a side opening (54) communicating with the second flow channel (69), the first support (50, 50A) further comprises a second duct structure (51) surrounding the side opening (54) and being coupled to the first duct structure (41), wherein the first duct structure (41) has a first sloping edge (42), the second duct structure (51) has a second sloping edge (52), the first sloping edge (42) and the second sloping edge (52) have complementary shapes and abut against each other.

12. The energy storage cabinet of any of claims 1-10, **characterized in that** the at least one second battery pack (21B) further comprises a first duct structure (41) surrounding the at least one first vent (24), the pipe (55) of the first support (50, 50A) has a side opening (54) communicating with the at least one first flow channel (68), the first support (50, 50A) further comprises a second duct structure (51) surrounding the side opening (54) and being coupled to the first duct structure (41), wherein the first duct structure (41) has a first sloping edge (42), the second duct structure (51) has a second sloping edge (52), the first sloping edge (42) and the second sloping edge (52) have complementary shapes and abut against each other.

13. The energy storage cabinet of any preceding claim, **characterized by** further comprising a heat insulating member (70) covering an upper side of the battery packs (21).

14. The energy storage cabinet of claim 13, **characterized in that** the heat insulating member (70) comprises a liquid tank.

15. The energy storage cabinet of claim 13 or 14, **characterized in that** the heat insulating member (70) comprises a heat insulating plate.

## Patentansprüche

1. Energiespeicherschrank (20, 20'), **dadurch gekennzeichnet, dass** er umfasst: einen Rahmen (22) umfassend eine erste Stütze (50, 50A), wobei die erste Stütze ein Rohr (55) und eine Trennwand (60) umfasst, wobei das Rohr einen ersten inneren Fluiddurchgang aufweist, die Trennwand (60) in dem Rohr (55) angeordnet ist und den ersten inneren Fluiddurchgang in mindestens einen ersten Strömungskanal (68) und einen zweiten Strömungskanal (69) unterteilt;
eine Mehrzahl von Batteriepacks (21), die auf dem Rahmen (22) angeordnet sind und jeweils ein Gehäuse (29) und eine Mehrzahl von Batteriezellen (12) umfassen, die in dem Gehäuse angeordnet sind, wobei das Gehäuse mindestens eine erste Entlüftung (24) und eine zweite Entlüftung (25) aufweist, wobei die Batteriepacks mindestens ein erstes Batteriepack (21A) und mindestens ein zweites Batteriepack (21B) umfassen, die auf zwei gegenüberliegenden Seiten der ersten Stütze (50, 50A) angeordnet sind, die zweite Entlüftung (25) des mindestens einen ersten Batteriepacks (21A) mit dem zweiten Strömungskanal (69) in Kommunikation steht, die mindestens eine erste Entlüftung (24) des mindestens einen zweiten Batteriepacks (21B) mit dem mindestens einen ersten Strömungskanal (68) in Kommunikation steht; und
eine Kühlvorrichtung (28), die dazu konfiguriert ist, Kühlluft zu erzeugen, wobei die Kühlluft dazu konfiguriert ist, in die mindestens eine erste Entlüftung (24) des mindestens einen ersten Batteriepacks (21A) und in den mindestens einen ersten Strömungskanal (68) der ersten Stütze (50, 50A) einzutreten, und wenn die Kühlluft durch das mindestens eine erste Batteriepack (21A) strömt, wird die Kühlluft erwärmt und wird zu warmer Luft, wobei die warme Luft dann in den zweiten Strömungskanal (69) der ersten Stütze (50, 50A) durch die zweite Entlüftung (25) des mindestens einen ersten Batteriepacks (21A) abgelassen wird.

2. Energiespeicherschrank nach Anspruch 1, **dadurch gekennzeichnet, dass** die Trennwand (60) zwei seitliche Ränder (61, 62) und einen Mittelabschnitt (63) aufweist, wobei die zwei seitlichen Ränder (61, 62) und der Mittelabschnitt (63) fest an einer Innenwand des Rohrs (55) angebracht sind.

3. Energiespeicherschrank nach Anspruch 2, **dadurch gekennzeichnet, dass** die Innenwand des Rohrs (55) einen ersten Wandabschnitt (W1) und einen zweiten Wandabschnitt (W2) aufweist, die dem ersten Wandabschnitt (W1) gegenüberliegt, wobei die zwei seitlichen Ränder (61, 62) der Trennwand (60) fest an dem ersten Wandabschnitt (W1) angebracht sind und der Mittelabschnitt (63) der Trennwand (60) fest an dem zweiten Wandabschnitt (W2) angebracht ist.

4. Energiespeicherschrank nach Anspruch 3, **dadurch gekennzeichnet, dass** der mindestens eine erste Strömungskanal (68) zwei Strömungskanäle umfasst, die sich auf zwei Seiten des Mittelabschnitt (63) der Trennwand (60) befinden, wobei die mindestens eine erste Entlüftung (24) des mindestens einen zweiten Batteriepacks (21B) zwei Entlüftungen umfasst, die jeweils mit den beiden Strömungskanälen in Kommunikation stehen.

5. Energiespeicherschrank nach Anspruch 3 oder 4, **dadurch gekennzeichnet, dass** die Trennwand (60) zwischen dem Mittelabschnitt (63) und den zwei seitlichen Rändern (61, 62) stufenförmig gebogen wird.

6. Energiespeicherschrank nach einem der vorhergehenden Ansprüche, **dadurch gekennzeichnet, dass** sich die erste Stütze (50, 50A) im Wesentlichen vertikal erstreckt, dass der mindestens eine erste Batteriepack (21A) und der mindestens eine zweite Batteriepack (21B) in Plural-Anzahl vorhanden sind und entlang der ersten Stütze (50, 50A) gestapelt sind, die zweite Entlüftung (25) jedes der ersten Batteriepacks (21A) mit dem zweiten Strömungskanal (69) der ersten Stütze (50, 50A) in Kommunikation steht, und die mindestens eine erste Entlüftung (24) jedes der zweiten Batteriepacks (21B) mit dem mindestens einen ersten Strömungskanal (68) der ersten Stütze (50, 50A) in Kommunikation steht.

7. Energiespeicherschrank nach einem der vorhergehenden Ansprüche, **dadurch gekennzeichnet, dass** der Rahmen (22) ferner eine zweite Stütze (50) und eine Kühlluftleitung (58) umfasst, wobei das mindestens eine erste Batteriepack (21A) zwischen der ersten Stütze (50, 50A) und der zweiten Stütze (50) positioniert ist, wobei die zweite Stütze (50) einen zweiten inneren Fluiddurchgang aufweist, der mit der mindestens einen ersten Entlüftung (24) des mindestens einen ersten Batteriepacks (21A) in Kommunikation steht, die Kühlluftleitung (58) mit einer Kühlluftauslassöffnung (27A) der Kühlvorrichtung (28), dem mindestens einen ersten Strömungskanal (68) der ersten Stütze (50, 50A) und der zweiten Stütze (50) verbunden ist.

8. Energiespeicherschrank nach Anspruch 7, **dadurch gekennzeichnet, dass** der Rahmen (22) ferner eine dritte Stütze (50) und eine Warmluftleitung (59) umfasst, wobei das mindestens eine zweite Batteriepack (21B) zwischen der ersten Stütze (50, 50A) und der dritten Stütze (50) positioniert ist, die dritte Stütze (50) einen dritten internen Fluiddurchgang aufweist, der mit der zweiten Entlüftung (25) des mindestens einen zweiten Batteriepacks (21B) in Kommunikation steht, die Warmluftleitung(59) mit einem Warmlufteinlassöffnung (27B) der Kühlvorrichtung (28), dem zweiten Strömungskanal (69) der ersten Stütze (50, 50A) und der dritten Stütze (50) verbunden ist, um die Warmluft zurück zu der Kühlvorrichtung (28) zu leiten.

9. Energiespeicherschrank nach Anspruch 8, **dadurch gekennzeichnet, dass** die Batteriepacks (21) entlang einer vertikalen Richtung gestapelt sind und in mehreren Stapeln angeordnet sind, wobei sich einer der Kühlluftleitung (58) und der Warmluftleitung (59) oberhalb der Batteriepacks (21) erstreckt und ein anderer der Kühlluftleitung (58) und der Warmluftleitung (59) unterhalb der Batteriepacks (21) erstreckt.

10. Energiespeicherschrank nach Anspruch 9, **dadurch gekennzeichnet, dass** die Kühlvorrichtung (28) an einer seitlichen Seite der Batteriepacks (21) positioniert ist, wobei sich die Kühlluftleitung (58) und die Warmluftleitung (59) im Wesentlichen horizontal zu der seitlichen Seite der Batteriepacks (21) erstrecken und mit der Kühlvorrichtung (28) verbunden sind.

11. Energiespeicherschrank nach einem der vorhergehenden Ansprüche, **dadurch gekennzeichnet, dass** das mindestens eine erste Batteriepack (21A) ferner eine erste Leitungsstruktur (41) umfasst, die die zweite Entlüftung (25) umgibt, das Rohr (55) der ersten Stütze (50, 50A) eine Seitenöffnung (54) aufweist, die mit dem zweiten Strömungskanal (69) in Kommunikation steht, die erste Stütze (50, 50A) ferner eine zweite Leitungsstruktur (51) umfasst, die die Seitenöffnung (54) umgibt und mit der ersten Leitungsstruktur (41) gekoppelt ist, wobei die erste Leitungsstruktur (41) eine erste schräge Kante (42) aufweist, die zweite Leitungsstruktur (51) eine zweite schräge Kante (52) aufweist, wobei die erste schräge Kante (42) und die zweite schräge Kante (52 ) komplementäre Gestalten aufweisen und aneinander anliegen.

12. Energiespeicherschrank nach einem der Ansprüche 1 bis 10, **dadurch gekennzeichnet, dass** das mindestens eine zweite Batteriepack (21B) ferner eine erste Leitungsstruktur (41) umfasst, die die mindestens eine erste Entlüftung (24) umgibt, das Rohr (55) der ersten Stütze (50, 50A) eine Seitenöffnung (54) aufweist, die mit dem mindestens einen ersten Strömungskanal (68) in Kommunikation steht, die erste Stütze (50, 50A) ferner eine zweite Leitungsstruktur (51) umfasst, die die erste Seitenöffnung (54) umgibt und mit der ersten Leitungsstruktur (41) gekoppelt ist, wobei die erste Leitungsstruktur (41) eine erste schräge Kante (42) aufweist, und die zweite Leitungsstruktur (51) eine zweite schräge Kante (52) aufweist, wobei die erste schräge Kante (42) und die zweite schräge Kante (52) komplementäre Gestalten aufweisen und aneinander anliegen.

13. Energiespeicherschrank nach einem der vorhergehenden Ansprüche, **dadurch gekennzeichnet, dass** er ferner ein wärmeisolierendes Element (70) umfasst, das eine Oberseite der Batteriepacks (21) abdeckt.

14. Energiespeicherschrank nach Anspruch 13, **dadurch gekennzeichnet, dass** das wärmeisolierende Element (70) einen Flüssigkeitstank umfasst.

15. Energiespeicherschrank nach Anspruch 13 oder 14, **dadurch gekennzeichnet, dass** das wärmeisolierende Element (70) eine wärmeisolierende Platte umfasst.

## Revendications

1. Armoire de stockage d'énergie (20, 20'), **caractérisée en ce qu'**elle comprend: un cadre (22) comprenant un premier support (50, 50A), le premier support comprenant un tuyau (55) et une cloison (60), le tuyau ayant un premier passage de fluide interne, la cloison (60) étant disposée dans le tuyau (55) et divisant le premier passage de fluide interne en au moins un premier canal d'écoulement (68) et un second canal d'écoulement (69);
une pluralité de blocs-batteries (21) disposés sur le cadre (22) et comprenant chacun un boîtier (29) et une pluralité d'éléments de batterie (12) disposés dans le boîtier, le boîtier ayant au moins un premier évent (24) et un second évent (25), dans lequel les blocs-batteries comprennent au moins un premier bloc-batterie (21A) et au moins un second bloc-batterie (21B) positionnés sur deux côtés opposés du premier support (50, 50A), le second évent (25) de l'au moins un premier bloc-batterie (21A) communique avec le second canal d'écoulement (69), l'au moins un premier évent (24) de l'au moins un second bloc-batterie (21B) communique avec l'au moins un premier canal d'écoulement (68); et
un dispositif de refroidissement (28) configuré pour produire de l'air froid, dans lequel l'air froid est configuré pour pénétrer dans l'au moins un premier évent (24) de l'au moins un premier bloc-batterie (21A) et dans l'au moins un premier canal d'écoulement (68) du premier support (50, 50A), et lorsque l'air froid passe à travers l'au moins un premier bloc-batterie (21A), l'air froid est chauffé et devient de l'air chaud, l'air chaud est ensuite évacué dans le second canal d'écoulement (69) du premier support (50, 50A) à travers le second évent (25) de l'au moins un premier bloc-batterie (21A).

2. Armoire de stockage d'énergie selon la revendication 1, **caractérisée en ce que** la cloison (60) a deux bords latéraux (61, 62) et une partie centrale (63), les deux bords latéraux (61, 62) et la partie centrale (63) sont fixés de manière fixe à une paroi interne du tuyau (55).

3. Armoire de stockage d'énergie selon la revendication 2, **caractérisée en ce que** la paroi interne du tuyau (55) a une première partie de paroi (W1) et une seconde partie de paroi (W2) opposée à la première partie de paroi (W1), les deux bords latéraux (61, 62) de la cloison (60) sont fixés à la première partie de paroi (W1), et la partie centrale (63) de la cloison (60) est fixée à la seconde partie de paroi (W2).

4. Armoire de stockage d'énergie selon la revendication 3, **caractérisée en ce que** l'au moins un premier canal d'écoulement (68) comprend deux canaux d'écoulement situés sur deux côtés de la partie centrale (63) de la cloison (60), dans laquelle l'au moins un premier évent (24) de l'au moins un second bloc-batterie (21B) comprend deux évents communiquant avec les deux canaux d'écoulement, respectivement.

5. Armoire de stockage d'énergie selon la revendication 3 ou 4, **caractérisée en ce que** la cloison (60) est pliée en forme d'escalier entre la partie centrale (63) et les deux bords latéraux (61, 62).

6. Armoire de stockage d'énergie selon l'une quelconque des revendications précédentes, **caractérisée en ce que** le premier support (50, 50A) s'étend sensiblement verticalement, l'au moins un premier bloc-batterie (21A) et l'au moins un second bloc-batterie (21B) sont en nombre multiple et sont empilés le long du premier support (50, 50A), le second évent (25) de chacun des premiers blocs-batteries (21A) communique avec le second canal d'écoulement (69) du premier support (50, 50A), et l'au moins un premier évent (24) de chacun des seconds blocs-batteries (21B) communique avec l'au moins un premier canal d'écoulement (68) du premier support (50, 50A).

7. Armoire de stockage d'énergie selon l'une quelconque des revendications précédentes, **caractérisée en ce que** le cadre (22) comprend en outre un deuxième support (50) et un conduit d'air froid (58), l'au moins un premier bloc-batterie (21A) est positionné entre le premier support (50, 50A) et le deuxième support (50), le deuxième support (50) possède un deuxième passage de fluide interne communiquant avec l'au moins un premier évent (24) de l'au moins un premier bloc-batterie (21A), le conduit d'air froid (58) est relié à un port de sortie d'air froid (27A) du dispositif de refroidissement (28), à l'au moins un premier canal d'écoulement (68) du premier support (50, 50A), et au deuxième support (50).

8. Armoire de stockage d'énergie selon la revendication 7, **caractérisée en ce que** le cadre (22) comprend en outre un troisième support (50) et un conduit d'air chaud (59), l'au moins un second bloc-batterie (21B) est positionné entre le premier support (50, 50A) et le troisième support (50), le troisième support (50) a un troisième passage de fluide interne communiquant avec le second évent (25) de l'au moins un second bloc-batterie (21B), le conduit d'air chaud (59) est relié à un port d'entrée d'air chaud (27B) du dispositif de refroidissement (28), au second canal d'écoulement (69) du premier support (50, 50A) et au troisième support (50) afin de guider l'air chaud pour qu'il retourne au dispositif de refroidissement (28).

9. Armoire de stockage d'énergie selon la revendication 8, **caractérisée en ce que** les blocs-batteries (21) sont empilés le long d'une direction verticale et sont disposés en piles multiples, l'un des conduits d'air froid (58) et d'air chaud (59) s'étend au-dessus des blocs-batteries (21), et un autre des conduits d'air froid (58) et d'air chaud (59) s'étend en dessous des blocs-batteries (21).

10. Armoire de stockage d'énergie selon la revendication 9, **caractérisée en ce que** le dispositif de refroidissement (28) est positionné sur un côté latéral des blocs-batteries (21), le conduit d'air froid (58) et le conduit d'air chaud (59) s'étendent sensiblement horizontalement sur le côté latéral des blocs-batteries (21) et sont reliés au dispositif de refroidissement (28).

11. Armoire de stockage d'énergie selon l'une quelconque des revendications précédentes, **caractérisée en ce que** l'au moins un premier bloc-batterie (21A) comprend en outre une première structure de conduit (41) entourant le second évent (25), le tuyau (55) du premier support (50, 50A) a une ouverture latérale (54) communiquant avec le second canal d'écoulement (69), le premier support (50, 50A) comprend en outre une seconde structure de conduit (51) entourant l'ouverture latérale (54) et couplée à la première structure de conduit (41), dans laquelle la première structure de conduit (41) a un premier bord incliné (42), la seconde structure de conduit (51) a un second bord incliné (52), le premier bord incliné (42) et le second bord incliné (52) ont des formes complémentaires et s'appuient l'un sur l'autre.

12. Armoire de stockage d'énergie selon l'une quelconque des revendications 1 à 10, **caractérisée en ce que** l'au moins un second bloc-batterie (21B) comprend en outre une première structure de conduit (41) entourant l'au moins un premier évent (24), le tuyau (55) du premier support (50, 50A) a une ouverture latérale (54) communiquant avec l'au moins un premier canal d'écoulement (68), le premier support (50, 50A) comprend en outre une seconde structure de conduit (51) entourant l'ouverture latérale (54) et couplée à la première structure de conduit (41), dans laquelle la première structure de conduit (41) a un premier bord incliné (42), la seconde structure de conduit (51) a un second bord incliné (52), le premier bord incliné (42) et le second bord incliné (52) ont des formes complémentaires et s'appuient l'un sur l'autre.

13. Armoire de stockage d'énergie selon l'une quelconque des revendications précédentes, **caractérisée en ce qu'**elle comprend en outre un élément d'isolation thermique (70) recouvrant une face supérieure des blocs-batteries (21).

14. Armoire de stockage d'énergie selon la revendication 13, **caractérisée en ce que** l'élément d'isolation thermique (70) comprend un réservoir de liquide.

15. Armoire de stockage d'énergie selon la revendication 13 ou 14, **caractérisée en ce que** l'élément d'isolation thermique (70) comprend une plaque d'isolation thermique.
